## Europäisches Patentamt
## European Patent Office
## Office européen des brevets

(11) Publication number: **0 076 583**
**B2**

(12) **NEW EUROPEAN PATENT SPECIFICATION**

(45) Date of publication of the new patent specification: **29.08.90**

(21) Application number: **82304856.6**

(22) Date of filing: **15.09.82**

(51) Int. Cl.⁵: **G 11 B 17/04, G 11 B 19/16**

(54) A device for carrying a disc in a disc-player.

(30) Priority: **18.09.81 JP 146293/81**

(43) Date of publication of application:
**13.04.83 Bulletin 83/15**

(45) Publication of the grant of the patent:
**07.05.86 Bulletin 86/19**

(45) Mention of the opposition decision:
**29.08.90 Bulletin 90/35**

(84) Designated Contracting States:
**AT BE CH DE FR GB LI NL SE**

(56) References cited:
**DE-A-2 338 120**
**FR-A-2 373 121**
**US-A-2 620 193**
**US-A-2 666 649**
**US-A-2 952 463**
**US-A-3 846 836**

**Handbuch des Rundfunk- und Fernseh-Grosshandels 1966/67, Verlag für Radio-Foto-Kinotechnik GmbH, Berlin-Borsigwalde**

(73) Proprietor: **KABUSHIKI KAISHA TOSHIBA**
**72, Horikawa-cho Saiwai-ku**
**Kawasaki-shi Kanagawa-ken 210 (JP)**

(72) Inventor: **Izumi, Yutaka c/o Patent Division**
**Tokyo Shibaura Denki K.K. 72, Horikawa-cho**
**Saiwai-ku Kawasaki-shi Kanagawa-ken 210 (JP)**
Inventor: **Kawakami, Hiroshi c/o Patent Division**
**Tokyo Shibaura Denki K.K. 72, Horikawa-cho**
**Saiwai-ku Kawasaki-shi Kanagawa-ken 210 (JP)**

(74) Representative: **Newstead, Michael John et al**
**Haseltine Lake & Co. 28 Southampton Buildings**
**Chancery Lane**
**London, WC2A 1AT (GB)**

## Description

The present invention relates to a device for carrying a disc in a disc-player, such as a device for positioning a phonograph record disc, a video record disc, a digital audio record disc or a magnetic record disc on a turntable in a disc-player.

As is known, analogue/digital record discs are sensitive to scratches and dust, and therefore it is recommended not to handle them except at the peripheral edge or the central hole. Therefore, in disc-players the record discs must not rub against any surface. This complicates the construction of automatic loading or ejecting devices for discs.

Automatic loading or ejecting devices have been developed for making handling record discs easy in loading or ejecting the discs. Especially in players for video record discs or digital audio discs bearing very minute and high density recorded information, automatic loading or ejecting devices are useful not to damage the information.

DE—A—2,338,120 discloses a device for guiding a flexible discoid record carrier. This document discloses the guiding of the flexible disc over a pair of thin elongate surfaces which are inclined at an angle relative to one another.

Some conventional loading or ejecting devices comprise holders like pockets movable between two positions. The holders have surfaces on which the record discs slide and are received. The holders, however, have the drawback that the information bearing portions of the record discs are rubbed and can be damaged by the surfaces as a result of many uses.

It is, therefore, an object of the present invention to provide a device which takes account of the aforementioned drawback and meets the aforementioned requirements, that is, to provide a device preventing a record disc from being damaged on an information bearing portion of the record disc.

According to the present invention, there is provided a device for carrying a disc in a disc-player having a holder for the disc, which holder is movable between an operative and an inoperative position for ejecting said disc and movable between the inoperative position and the operative position for insertion of said disc, the holder including (a) means for supporting the disc during said movement, and (b) the device, characterised in that the device comprises:

a first pair of surfaces, inclined relative to one another for supporting the disc in the inoperative position, said first pair of surfaces lying about a centrally disposed plane aligned orthogonally to the plane of the disc in said holder; and

a second pair of surfaces opposite said first pair of surfaces, said second pair of surfaces also being inclined relative to one another and lying about a centrally disposed plane aligned orthogonally to the plane of the disc during insertion or ejection, and wherein said first and second pairs of surfaces each partially defines an elongate aperture for receiving the disc, the aperture being widest substantially at a mid point of its length and approaching the thickness of the disc at its ends, so that the peripheral edge of the disc is the only part of said disc which comes into contact with said pair of surfaces.

The present invention will now be described, by way of example, with reference to the accompanying drawings, in which:-

Figure 1 is a perspective view of a digital audio disc-player;

Figure 2 is a perspective view of an automatic disc loading and ejecting mechanism of the digital audio disc-player of Figure 1, in which a disc carriage is in an ejection position;

Figures 3a and 3b are a top plan view and a front view of the disc carriage;

Figure 3c is a longitudinal sectional view taken along the lines X—X of Figure 3b;

Figure 4 is an enlarged view of Figure 3c being accompanied by disc driving apparatus; and

Figures 5a and 5b are perspective views of the automatic disc loading and ejecting mechanism, respectively in an ejected and a loaded condition of the disc.

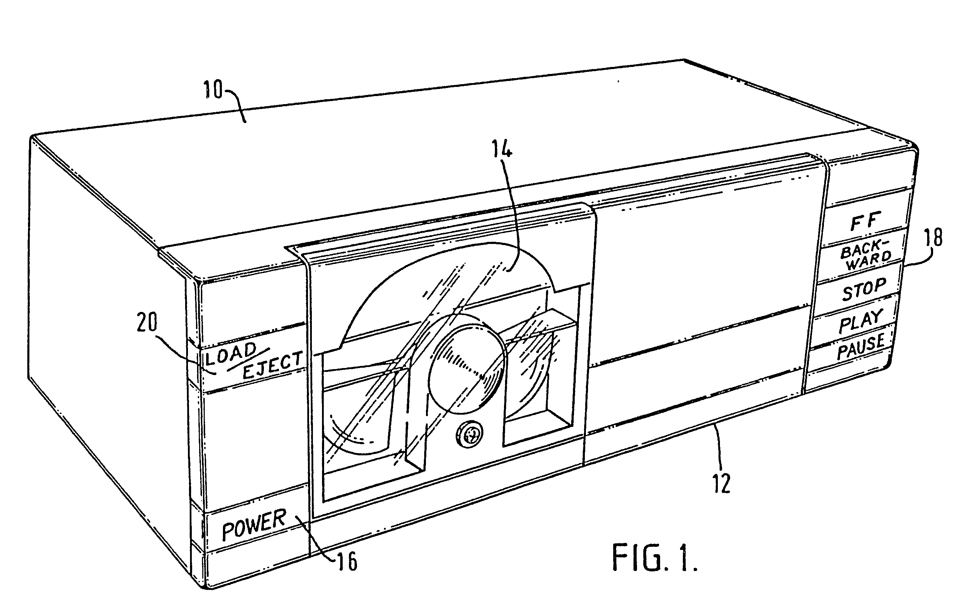

Figure 1 shows a perspective view of a digital audio disc-player in which a disc carrying device according to an example of the present invention is used. As shown in Figure 1, a casing 10 of the disc player has a control panel 12 and a disc carrying device 14, a part of the automatic disc loading and ejecting mechanism, on its front side. Control panel 12 is provided with a power switch button 16, a disc drive control section 18 and a loading/ejecting button 20 for actuating the automatic disc loading and ejecting mechanism to move disc carrying device 14 to an operative or an inoperative position.

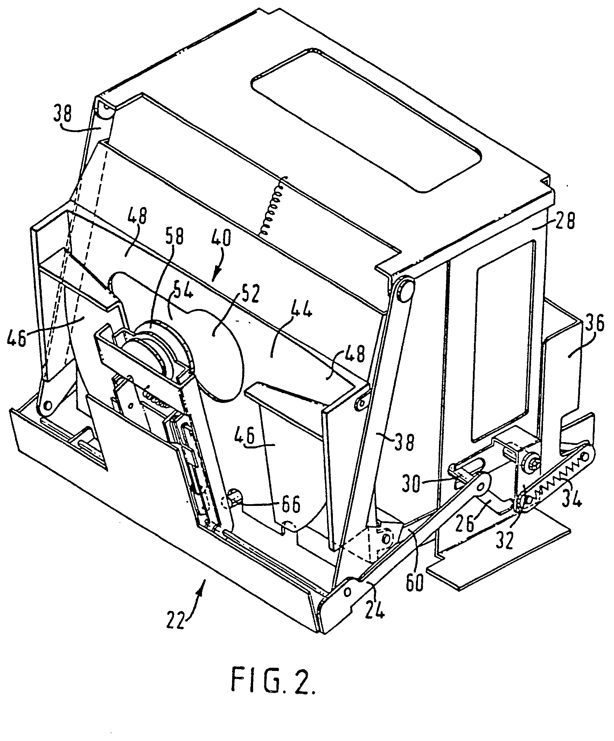

Figure 2 shows a perspective view of the automatic disc loading and ejecting mechanism, 22. In Figure 2, each of a pair of drive rods 24, 24 (only one being visible) is engaged with a respective one of guide slits 26, 26 (only one being visible), formed on respective sides of a chassis 28, through a respective one of pins 30, 30 (only one being visible) mounted on respective ends of drive rods 24, 24. Pins 30, 30 are movable along guide slits 26, 26 by means of drive levers 32, 32 (only one being visible) pivoted on respective sides of chassis 28 near guide slits 26, 26. Drive levers 32, 32 have forked ends which engage with pins 30, 30 and other ends pivoted to respective ends of connecting rods 34, 34 (only one being visible). Other ends of connecting rods 34, 34 are pivoted on respective sides of a drive slider 36. Drive slider 36 is vertically slidable by means of a motor (not shown). Figure 2 shows the condition in which drive slider 36 is in its lower position.

Drive rods 24, 24 are pivoted at their other ends to respective ones of the free ends of support levers 38, 38 pivoted to respective sides of the upper portion of chassis 28.

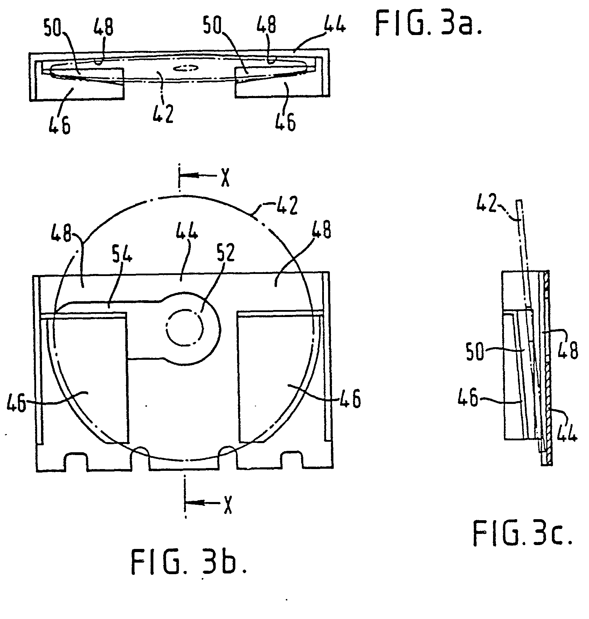

There is pivoted a disc carriage 40 to the pair of support levers 38, 38 near their free ends connecting to drive rods 24, 24. Disc carriage 40 is adapted to receive a record disc 42 as shown in Figures 3a, 3b and 3c and forms a part of the automatic apparatus bringing record disc 42 into an operative or inoperative position. Disc carriage 40 has a rear wall 44 and a pair of separated front walls 46, 46 opposite rear wall 44. Rear wall 44 has a pair of surfaces 48, 48 inclined backwards from respective side portions of disc carriage 40 to its centre portion, confronting the pair of front walls 46, 46. That is, the surfaces 48, 48 are not parallel with each other so that the peripheral edge of record disc 42 is the only part of record disc 42 which comes into contact with the pair of surfaces 48, 48 of rear wall 44.

Each wall of the pair of front walls 46, 46 has also an individual surface 50 inclined forwards from the respective lower corner portion of disc carriage 40 toward its upper centre position, confronting rear wall 44. That is, individual surfaces 50, 50 of the pair of front walls 46, 46 are not parallel with each other so that the peripheral edge of record disc 42 is the only part of the disc which comes into contact with the individual surfaces 50, 50 of the pair of front walls 46, 46.

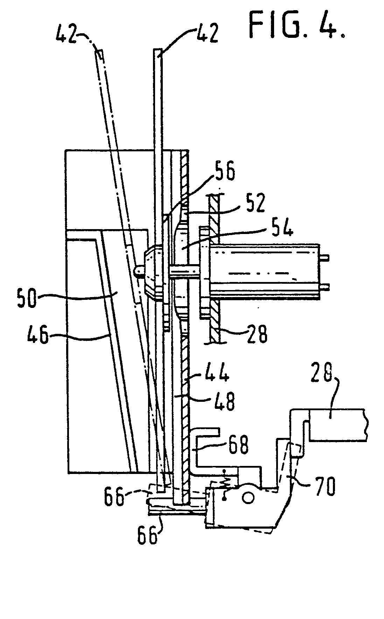

Rear wall 44 of disc carriage 40 has a central round opening 52 and a side elongate opening 54 both connecting together. Central round opening 52 allows a turntable 56 to penetrate inside disc carriage 40 as shown in Figure 4, when disc carriage 40 is in the operative position. Side opening 54 allows an optical pick-up (not shown) to penetrate inside disc carriage 40 when disc carriage 40 is in the operative position. Front walls 46, 46 are separated by a given distance from each other for allowing a disc clamper 58 (see Figure 2) to penetrate inside disc carriage 40 when disc carriage 40 is in the operative position. Then, disc clamper 58 is able to press record disc 42 against turntable 56 for clamping record disc 42 steadily on turntable 56.

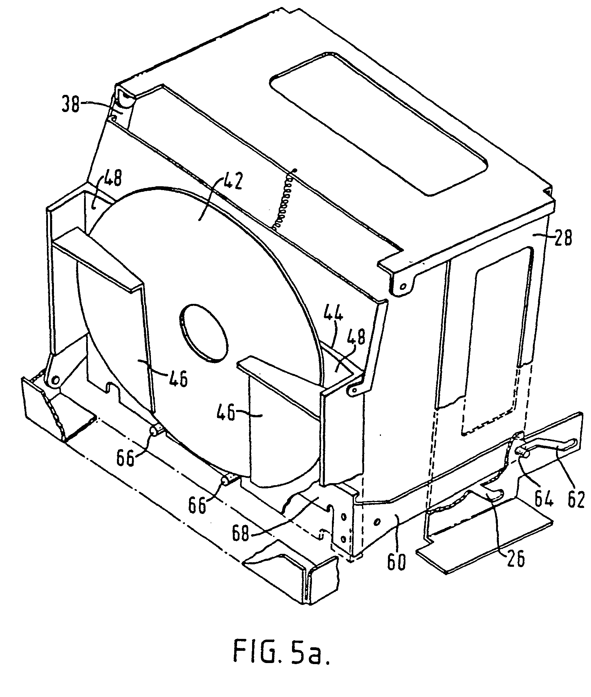

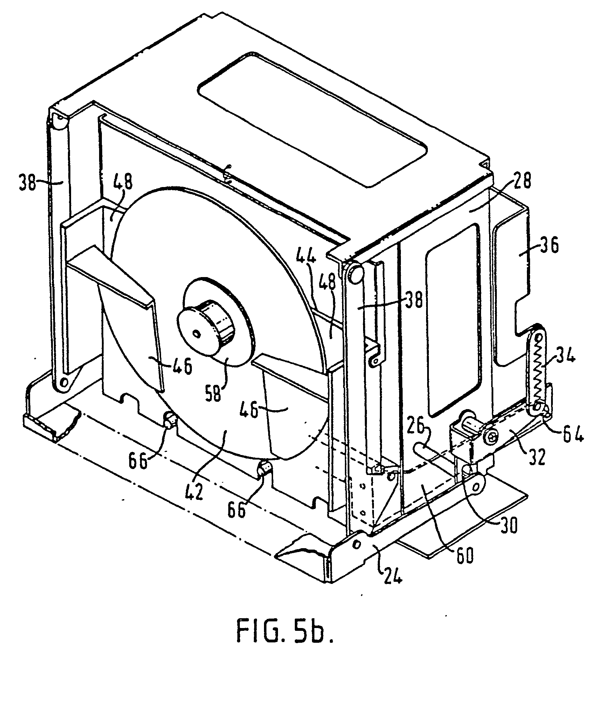

Disc carriage 40 is further fixed to respective ends of guide rods 60, 60 as shown in Figure 5a. The other ends of guide rods 60, 60 engage with respective ones of a second pair of guide slits 62, 62 (only one being visible), formed on respective sides of chassis 28, through respective pins 64, 64 (only one being visible) mounted on respective ends of guide rods 60, 60. Pins 64, 64 are movable along guide slits 62, 62 when disc carriage 40 is driven by drive rods 24, 24 between the operative and the inoperative positions. Thus, disc carriage 40 is controlled as to its posture or its inclination according to the shape of guide slits 62, 62. When disc carriage 40 is in the inoperative position, disc carriage 40 is inclined forwards for easy insertion or removal of record disc 42. When disc carriage 40 is in the operative position, disc carriage 40 rises perpendicularly as shown in Figure 5b.

Figure 4 shows the support of record disc 42. In the operative position of disc carriage 40, record disc 42 (shown by dot-dash lines) leans on the inclined surfaces of front walls 46, 46. Then, record disc 42 is supported at its lower position by a pair of support pins 66, 66 shown by broken lines. Each of the pair of support pins 66, 66 is pivoted on a beam 68 connecting the pair of guide rods 60, 60 and biased clockwise.

In the operative position, record disc 42 is set on turntable 56 penetrating into disc carriage 40 by being pushed by disc clamper 58 (not shown in Figure 4). Then, support pins 66, 66 are rocked counterclockwise by means of a protruding portion 70 connected to support pins 66, 66 fitting against a position of chassis 28. Thus, support pins 66, 66 become free from record disc 42 set on turntable 56.

The aforementioned surfaces 48, 48 of rear wall 44, owing to their symmetry, ensure that the peripheral edge of record disc 42 is the only part to come in contact with rear wall 44, thus avoiding any rubbing of the information bearing part when record disc 42 enters inside disc carriage 40. Front walls 46, 46 also have surfaces 50, 50 similar to those of rear wall 44 in order to give the same protection (e.g., in the case of two-sided records or records inserted the wrong way up).

## Claims

1. A device (14) for carrying a disc (42) in a disc-player having a holder for the disc, which holder is movable between an operative and an inoperative position for ejecting said disc and movable between the inoperative position and the operative position for insertion of said disc, the holder including (a) means (66) for supporting the disc during said movement, and (b) the device (14), characterised in that the device comprises:

a first pair of surfaces (46, 46), inclined relative to one another for supporting the disc in the inoperative position, said first pair of surfaces lying about a centrally disposed plane aligned orthogonally to the plane of the disc in said holder; and

a second pair of surfaces (48, 48) opposite said first pair of surfaces, said second pair of surfaces also being inclined relative to one another and lying about a centrally disposed plane aligned orthogonally to the plane of the disc during insertion or ejection, and wherein said first and second pairs of surfaces each partially defines an elongate aperture for receiving the disc, the aperture being widest substantially at a mid point of its length and approaching the thickness of the disc at its ends, so that the peripheral edge of the disc is the only part of said disc which comes into contact with said pair of surfaces.

2. A holder according to claim 1, wherein the first pair of surfaces of the device lie symmetrically about said centrally disposed plane.

3. A holder according to claim 1 or 2, wherein the second pair of surfaces of the device lie symmetrically about said centrally disposed plane.

4. A holder as claimed in any preceding claim, wherein the first and second pairs of surfaces of the device are inclined with respect to each other so that the respective pairs of surfaces are tapered towards one another in the direction of insertion of the disc.

## Patentansprüche

1. Einrichtung (14) zum Tragen einer Platte (42) in einem Plattenspieler mit einem Halter für die Platte, der zum Auswerfen der Platte zwischen einer Arbeitsstellung und einer Ruhestellung und zum Einführen der Platte zwischen der Ruhestellung und der Arbeitsstellung bewegbar ist, wobei der Halter (a) Mittel (66) zur Halterung der Platte während der Bewegung und (b) die Einrichtung (14) aufweist, dadurch gekennzeichnet, daß die Einrichtung aufweist:

ein Paar von relativ zueinander geneigten Flächen (46, 46) zur Halterung der Platte in der Ruhestellung, wobei diese Flächen um eine zentral angeordnete Ebene liegen, die orthogonal zur Ebene der Platte in dem Halter ausgerichtet ist,

sowie ein zweites Paar von Flächen (48, 48), die den Flächen des ersten Paares gegenüberliegen und die ebenfalls relativ zueinander geneigt sind und um eine zentral angeordnete Ebene liegen, die während des Einführens oder des Auswerfens der Platte orthogonal zur Ebene der Platte ausgerichtet ist, wobei das erste und das zweite Paar von Flächen jeweils eine längliche Öffnung zum Aufnehmen der Platte begrenzen, wobei die Breite dieser Öffnung etwa in der Mitte ihrer Längsausdehnung am größten ist und sich in ihren Endbereichen der Dicke der Platte annähert, so daß der Umfangsrand der Platte der einzige Teil der Platte ist, der mit dem Paar von Flächen in Berührung kommt.

2. Halter nach Anspruch 1, bei dem die Flächen des ersten Paares symmetrisch um die zentral angeordnete Ebene liegen.

3. Halter nach Anspruch 1 oder 2, bei dem das zweite Paar von Flächen der Einrichtung symmetrisch um die zentral angeordnete Ebene liegen.

4. Halter nach einem der vorhergehenden Ansprüche, bei dem die Flächen des ersten Paares und die Flächen des zweiten Paares relativ zueinander geneigt sind, so daß die betreffenden Paare von Flächen in Einführungsrichtung der Platte aufeinander zu laufen.

## Revendications

1. Un dispositif (14) pour porter un disque (42) dans un tourne-disque ayant un support pour le disque, ce support étant mobile entre une position de fonctionnement et une position de non fonctionnement pour éjecter ledit disque et étant mobile entre la position de non fonctionnement et la position de fonctionnement pour l'insertion dudit disque, le support comprenant (a) des moyens (66) pour supporter le disque pendant ledit mouvement et (b) le dispositif (14), caractérisé en ce que le dispositif comprend:

une première paire de surfaces (46, 46) inclinées l'une par rapport à l'autre pour supporter le disque dans la position de non fonctionnement, les surfaces de la première paire de surfaces étant disposées de part et d'autre d'un plan central aligné orthogonalement au plan du disque dans ledit support; et

une seconde paire de surfaces (48, 48) opposée à ladite première paire de surfaces, les surfaces de cette seconde paire étant également inclinées l'une par rapport à l'autre et étant disposées de part et d'autre d'un plan central aligné orthogonalement au plan du disque pendant l'insertion ou l'éjection, et dans lequel lesdites première et seconde paires de surfaces définissent en partie chacune une ouverture allongée pour recevoir le disque, l'ouverture étant sensiblement plus large 'au niveau d'un point central de sa longueur et se rapprochant de l'épaisseur du disque au niveau de ses extrémités, de sorte que le bord périphérique du disque constitue la seule partie dudit disque qui vient en contact avec ladite paire de surfaces.

2. Un support selon la revendication 1, dans lequel les surfaces de la première paire de surfaces du dispositif sont disposées symétriquement de part et d'autre dudit plan central.

3. Un support selon la revendication 1 ou 2, dans lequel les surfaces de la seconde paire de surfaces du dispositif sont disposées symétriquement de part et d'autre dudit plan central.

4. Un support comme revendiqué dans une revendication précédente quelconque, dans lequel les surfaces des première et seconde paires de surfaces du dispositif sont inclinées les unes par rapport aux autres de sorte que les paires respectives de surfaces soient en biais les unes vers les autres dans la direction d'insertion du disque.

FIG. 1.

FIG. 2.

FIG. 3a.

FIG. 3b.

FIG. 3c.

3

FIG. 4.

FIG. 5a.

FIG. 5b.